# EUROPÄISCHE PATENTSCHRIFT

(11) **EP 3 172 380 B1**
(45) Veröffentlichungstag und Bekanntmachung des Hinweises auf die Patenterteilung: **28.11.2018**
(21) Anmeldenummer: 15762480.0
(22) Anmeldetag: 24.07.2015
(51) Int. Cl.: E01C 7/04, E01C 7/35, E01C 11/24, C04B 111/00

(54) **TEXTURIERUNGSELEMENTE FÜR VERKEHRSFLÄCHEN, VERWENDUNG DEREN UND VERFAHREN ZUR HERSTELLUNG VON VERKEHRSFLÄCHEN**
TEXTURIZING ELEMENTS FOR TRAFFIC SURFACES, USE THEREOF AND METHOD FOR PRODUCING TRAFFIC SURFACES
ÉLÉMENTS DE TEXTURE POUR SURFACES DE CIRCULATION, UTILISATION DE CEUX-CI ET PROCÉDÉ DE FABRICATION DE SURFACE DE CIRCULATION

(30) Priorität: 25.07.2014 EP 14002585
(43) Veröffentlichungstag der Anmeldung: 31.05.2017
(73) Patentinhaber: Schmidt, Jürgen, 29225 Celle (DE)
(72) Erfinder: RIFFEL, Siegfried, 74338 Talheim (DE); SCHMIDT, Juergen, 29225 Celle (DE)
(74) Vertreter: Zellentin & Partner mbB Patentanwälte
(86) Internationale Anmeldenummer: PCT/EP2015/001533
(87) Internationale Veröffentlichungsnummer: WO 2016/012101

(56) Entgegenhaltungen:
- DE-A1- 3 524 661
- FR-A1- 2 160 899

## Beschreibung

Die vorliegende Erfindung betrifft ein Texturierungselement für das Abstreuen oder Abstumpfen von Verkehrsflächen gemäß dem Oberbegriff des Patentanspruchs 1, Verfahren zur Herstellung und Instandsetzung von Verkehrsflächen gemäß den Oberbegriffen der Ansprüche 12-15 und Verwendungen von Texturierungselementen und von Trägern mit Texturierungselementen gemäß den Ansprüchen 18-20.

Der Bau von Verkehrsflächen, insbesondere von Straßen und Wegen, ist erforderlich, da natürlich gewachsener Boden die Anforderungen des modernen Verkehrs- und Transportwesens nicht erfüllt. Zu den Zielen des Straßenbauwesens gehört es, dauerhafte und sichere Verkehrsflächen zu schaffen, die gleichzeitig möglichst umweltverträglich und wirtschaftlich sind. Die Bautechnik und die Bauverfahren werden laufend weiterentwickelt bzw. optimiert, um den steigenden Anforderungen hinsichtlich Qualität, Wirtschaftlichkeit und Verkehrssicherheit gerecht zu werden. Insbesondere der Schutz des Menschen und der Umwelt haben stark an Bedeutung gewonnen und erfordern neue Lösungswege beim Bau von Straßen und Wegen.

Ein an Bedeutung stark zunehmender Aspekt ist der Lärmschutz. Da Straßen die am weitesten verbreiteten Verkehrsflächen sind, spielt vor allem der Straßenverkehrslärm (auch kurz Straßenlärm) eine große Rolle. Mit Straßenverkehrslärm wird der gesamte vom Straßenverkehr erzeugte Lärm bezeichnet. Dazu sind vor allem die von Personen- und Lastkraftwagen sowie motorisierten Zweirädern erzeugten Geräusche zu rechnen. Schall entsteht u.a. durch Antriebsgeräusche, Rollgeräusche von Reifen und den bei hohen Geschwindigkeiten an der Karosserie und Anbauteilen entstehenden Luftwirbeln.

Antriebsgeräusche entstehen durch den Betrieb von Motor, Getriebe und Antriebsstrang eines Kraftfahrzeuges sowie deren Nebenaggregaten und Anbauteilen. Antriebsgeräusche werden als Luft- und Körperschall ins Fahrzeuginnere und nach außen weitergeleitet und dominieren - abhängig von Fahrzeugklasse und Antriebsart - bei niedrigen Geschwindigkeiten und hoher Motorleistung, wie zum Beispiel im Stadtverkehr oder beim Anfahren, den erzeugten Lärm. Ihre Verminderung ist ebenso wie die Minimierung der Luftwirbel bei hohen Geschwindigkeiten Sache der Fahrzeughersteller.

Die Rollgeräusche von Reifen werden dagegen stark von der Fahrbahn beeinflusst. Durch die Rauheit der Fahrbahn und das Reifenprofil werden die Profilstollen und die Karkasse in Schwingungen versetzt und strahlen Luftschall ab. Außerdem wird Luft im Reifenlatsch im Einlauf verdrängt und im Auslauf wieder angesaugt. Hierdurch entstehen aerodynamische Geräusche (sog. Airpumping). Reifen-Fahrbahn-Geräusche sind über einen weiten Geschwindigkeitsbereich (ab etwa 30-50 km/h, je nach Gangwahl) dominant. Besonders stark treten sie z.B. auf Natursteinpflaster mit rauer Oberfläche und breiten Fugen sowie bei Lkw in Erscheinung.

Es ist daher eine ständige Aufgabe, Verkehrsflächen zu schaffen, die weniger Lärm erzeugen, wobei natürlich Wirtschaftlichkeit und Dauerhaftigkeit nicht vernachlässigt werden dürfen.

Straßen und Wege werden aus verschiedenen Materialien wie Asphalt, Beton, Pflaster oder aus ungebundenem Material (beispielsweise Schotter) hergestellt. Es gibt bereits viele Vorschläge für lärmmindernde Verkehrsflächen, von denen etliche auch in der Praxis angewandt werden. Ein Überblick findet sich z.B. in http://www.umweltbundesamt.de/publikationen/laermminderndefahrbahnbelaege-0, ISSN 1862-4804.

Aus DE 35 24 661 A1 ist bekannt, Teilchen mit Glaskügelchen an der Oberfläche auf einen Belag aufzubringen. Dadurch sollen reflektierende Markierungen geschaffen werden. Die vorzugsweise tetraedrischen Teilchen sollen mit der Spitze nach oben fixiert werden, um eine möglichst hohe Reflexion zu erhalten. Die FR 2160899 A1 schlägt zur Erhöhung der Griffigkeit von Fahrbahnbelägen vor, tetraedrische Teilchen mit einer Spitze oder Kante nach oben weisend einzubauen. In beiden Fällen ist aufgrund der geringen angestrebten Fläche keine Lärmminderung zu erwarten, im Gegenteil, im Vergleich zu üblichem Abstreusplitt ist mit einer Verstärkung des Lärms zu rechnen.

Überraschend wurde nun gefunden, dass sich bei Verkehrsflächen, welche abgestreut bzw. texturiert werden, durch ein definiert geformtes Texturierungsmittel die Lärmerzeugung vermindern lässt, wobei die Verkehrsflächen zugleich dauerhaft und wirtschaftlich sind.

Die Erfindung löst daher die obige Aufgabe durch Texturierungselemente mit einer tetraedrischen Grundform mit einem Abstand zwischen zwei Eckpunkten von 2 bis 10 mm, wobei die Texturierungselemente Oberflächen aufweisen, die mit einer Wölbungshöhe von 5 bis 35 % des Abstandes zwischen zwei Eckpunkten vorgewölbt sind, und wobei die Texturierungselemente eine Druckfestigkeit von 120 bis 180 MPa bestimmt nach DIN EN 196-1 aufweisen. Die Aufgabe wird außerdem gelöst durch eine Verwendung der Texturierungselemente zum Abstreuen von Verkehrsflächen und durch ein Verfahren zur Herstellung von Verkehrsflächen, bei dem die Texturierungselemente in die noch plastische Oberfläche der Verkehrsfläche eingewalzt, eingedrückt oder eingerieben werden.

Asphaltstraßen werden in vielen Ausgestaltungen beim Fertigungsprozess mit natürlichen, gebrochenen Gesteinskörnungen (sog. Splitt) oder mit industriell hergestellten Gesteinskörnungen (z.B.synthetische Hartstoffe, Bauxit, Korund, Chromerzschlacke) abgestreut, wobei der im Überschuss aufgestreute Splitt in die heiße Asphaltdeckschicht eingewalzt wird. Als Lieferkorngrößen kommen dabei Körnungen von 1/2, 1/3, 2/3, 3/4, 2/5, 4/8, 5/8 oder 8/11 zum Einsatz, wobei die Splitte und Hartstoffe nach den technischen Regelwerken einen nicht unerheblichen Anteil Über- und Unterkorn enthalten dürfen (in Deutschland z.B. maximal 10 oder 15 Gew. % Unterkorn und maximal 10 Gew. % Überkorn). Für eine dauerhaft griffige und lärmarme Fahrbahnoberfläche dürfen nur qualitativ hochwertige, gebrochene Gesteinskörnungen, sog. Splitte, verwendet werden, die in Bezug auf Druckfestigkeit, Polier- und Verschleißwiderstand, Kornform, Bruchflächigkeit, Plattigkeit, Sieblinie, Affinität etc. den hohen Anforderungen für Abstreumaterial genügen. Diese Splitte bzw. Hartstoffe sind aufgrund der besonderen technischen Anforderungen und der aufwändigen Aufbereitung teuer und in vielen Regionen auch nur begrenzt verfügbar.

Die Griffigkeit und Lärmminderung von Fahrbahnoberflächen wird dabei entscheidend von der Kornform und Plattigkeit der gebrochenen Gesteinskörnungen geprägt. In der Praxis zeigt sich, dass oft aufgrund der zulässigen Toleranz ungünstig geformter bzw. plattiger Körner (≤ 15 Gew.-%, Kategorie *S*/₁₅ und *F*/₁₅) die Anforderungen an die Griffigkeit und Lärmminderung nicht realisierbar sind. Hier schafft die Erfindung Abhilfe,

Die Idealvorstellung lärmarmer Oberflächen besteht aus Plateaus und Schluchten. Die Plateaus sollten sich dabei möglichst auf gleicher Höhe befinden, damit sie dem Reifen eine maximale Anzahl Tragplateaus auf gleicher Ebene zur Verfügung stellen. Hierdurch wird die für die Rollgeräusche maßgeblich verantwortliche Verformung des Reifens minimiert. Die Schluchten zwischen den Tragplateaus erleichtern die Abführung der Luft zwischen Reifen und Fahrbahnoberfläche und vermindern bzw. verhindern damit das Entstehen von aeroakustischen Verpressgeräuschen (Airpumping).

Die erfindungsgemäß gewählte Tetraederform stellt mit jeder Teilfläche ein großes Tragplateau bereit. Da alle Tetraederflächen gleich sind, ist es unerheblich, welche nach oben zeigt. Theoretisch könnte die gesamte Oberfläche deckend mit gleichseitigen Dreiecken belegt werden, so dass die Forderung nach einer ebenmäßigen Auslegung der Fahrbahnoberfläche gewährleistet ist. Die Tetraederform sorgt andererseits dafür, dass beim Einwalzen, Eindrücken oder Einreiben der Texturierungselemente stets eine Fläche nach oben zeigt. Die Eindringkraft ist für die Spitze am geringsten, so dass auch Texturierungselemente, die mit einer Fläche nach unten liegen, beim Einwalzen, Eindrücken oder Einreiben mit einer Fläche nach oben gerichtet werden. Da die Eindringkraft mit zunehmender Eindringtiefe linear zunimmt, werden alle Texturierungselemente im Wesentlichen gleich tief eingewalzt, eingedrückt oder eingerieben.

Die bevorzugt vorgesehene Rundung der Flächen/Kanten führt dazu, dass die Texturierungselemente ähnlich wie Kugeln, welche diesbezüglich optimal wären, beim Einwalzen, Eindrücken oder Einreiben durch Rollen gleichmäßig verteilt werden. Es wird dabei ein Kompromiss zwischen guter Verteilfähigkeit durch Rollen und möglichst ebener Fläche als Tragplateau gewählt. In der Regel weisen größere Texturierungselemente stärkere Vorwölbungen auf. Die gerundeten Kanten tragen auch dazu bei, dass die Texturierungselemente bei der Handhabung wenig Abrieb erzeugen, welcher die Haftung bzw. den Verbund beeinträchtigen könnte.

Geeignete Wölbungen ergeben sich mit einem Verhältnis von Wölbungshöhe zum Abstand zwischen zwei Eckpunkten (Kantenlänge des Tetraeders ohne Wölbung) im Bereich von 0,05 bis 0,35, bevorzugt 0,10 bis 0,30 und besonders bevorzugt 0,15 bis 0,25. Mit Wölbungshöhe wird der größte Abstand zwischen gewölbter Fläche und der Ebene bezeichnet, die durch die drei Ecken der betroffenen Fläche definiert ist. Es versteht sich, dass die Kontur leicht unregelmäßig sein darf, die Kante muss nicht einem Kreisbogen und die Fläche nicht einem Kugelabschnitt entsprechen. Es ist jedoch vorzuziehen, wenn die Abweichungen nicht groß sind, damit die Rolleigenschaften gut sind.

Die Abstände zwischen zwei Eckpunkten, d.h. die Kantenlängen des nicht gewölbten Tetraeders, sollen im Bereich von 2 bis 10 mm liegen, vorzugsweise im Bereich von 3 bis 8 mm und besonders bevorzugt im Bereich von 4 bis 6 mm, wobei alle Texturierungselemente im Wesentlichen die gleiche Kantenlänge aufweisen und alle Kantenlängen eines Texturierungselementes im Wesentlichen gleich lang sind. Im Wesentlichen gleich lang und im Wesentlichen die gleiche Kantenlänge heißt, dass die Unterschiede die Ausrichtungsfähigkeit und die gleiche Höhe nach dem Einwalzen, Eindrücken oder Einreiben nicht gefährden dürfen. Es wird erwartet, dass durch die Fertigung bedingte Toleranzen von maximal 10 %, vorzugsweise maximal 5 %, insbesondere maximal 2 % der Kantenlänge oder bis zu 1 mm, vorzugsweise bis zu 0,5 mm und insbesondere bis zu 0,2 mm unschädlich sind.

Um die gewünschten Druckfestigkeiten zu erreichen, werden die Texturierungselemente aus Materialien hergestellt, welche diese Eigenschaften mitbringen.

Ein erstes bevorzugtes Material ist Beton, insbesondere "Reaction Powder Concrete" kurz RPC oder "Ultra High Performance Concrete" kurz UHPC. Zweckmäßig wird ein entsprechender Zement, z.B. ein CEM I 52,5 R, mit Gesteinsmehl, z.B. Quarzmehl, als Gesteinskörnung und Wasser gemischt und in Formen der gewünschten Form und Größe erhärten gelassen. In der Regel ist Fließmittel nötig und enthalten.

Die Formen können vorteilhaft mittels Abstreuen mit hochverschleißfester Gesteinskörnung, mechanischer Behandlung und/oder chemischer Behandlung eine Mikrorauheit erhalten, so dass die Texturierungselemente durch die Mikrorauheit eine gute und dauerhafte Griffigkeit besitzen. Als hochfeste Gesteinskörnung, sog. Feinsand, eignen sich natürliche Sande, z.B. Bauxit, Flint, Korund, Granat, und industriell hergestellte Gesteinskörnungen, beispielsweise synthetisches Aluminiumoxid, Chromerzschlacke, Siliciumcarbid, Chrom(III)oxid, Zirkonium(IV)oxid oder ähnliches. Die Korngrößen betragen zweckmäßig von 20 bis 160 µm. Die erzeugte Mikrorauheit beträgt vorzugsweise von 0,063 bis 0,2 mm.

Für Texturierungselemente mit geringer Wölbungshöhe sind auch einteilige Formen verwendbar. Um dabei eine Mikrorauheit zu generieren bietet es sich an, die in der Form die Oberfläche bildende Fläche nach dem Abziehen mit einem hoch verschleißfesten Feinsand abzustreuen.

Es ist außerdem möglich, die Texturierungselemente an den Oberflächen mit photokatalytisch aktivem Material (z. B. Nano-Titandioxid) zu versehen oder die Texturierungselemente aus einem photokatalytisch aktiven Beton (z.B. auf Basis von TioCem®, erhältlich von HeidelbergCement AG) herzustellen. Damit werden einerseits Selbstreinigungseigenschaften erzielt und andererseits kann die Fahrbahnoberfläche zum Abbau von Luftschadstoffen (z. B. Stickoxide NOₓ) beitragen.

Eine typische RPC-Rezeptur umfasst:
500 - 1000 kg/m³ Zement; 1500 - 2000 kg/m³ Gesteinsmehl und 125 - 200 kg/m³ Wasser (Wasserzementwert (w/z) 0,25 - 0,35 bzw. Wasserbindemittelwert (w/b) 0,15 - 0,25). Zweckmäßig werden noch 25 - 100 kg/m³ Silikastaub oder auch als Silicaslurry, zugegeben, und/oder 3 - 6 Gew.-% Fließmittel, bezogen auf die Zementmasse. Typische Frischbetonrohdichten liegen im Bereich von 2400 bis 2600 kg/m³.

Ein zweites bevorzugtes Material für die Texturierungselemente ist Keramik. Geeignete anorganische Rohstoffe wie zum Beispiel Ton werden mit Wasser angeteigt, in Form gebracht, zu Grünlingen getrocknet und gesintert. Auch dabei kann die Oberfläche mit der oben beschriebenen Mikrorauheit ausgerüstet werden.

Die Texturierungselemente können auch als Presslinge in entsprechenden Formen mit Hilfe von hydraulischen Pressen hergestellt werden. Dazu wird das erdfeuchte RPC-Baustoffgemisch in einer Rundlauf Formkörperpresse in einer speziellen Presslingschalung unter hydraulischem Druck in die entsprechende Form der Texturierungselemente gebracht. Die frischen Presslinge weisen eine so hohe Festigkeit auf, dass sie ohne Schädigung von einem Transportband aufgenommen und damit direkt weiter in eine Feucht- bzw. Nebelnachbehandlungskammer transportiert werden können. In der Feucht- bzw. Nebelnachbehandlungskammer wird den Texturierungselementen die für die vollständige Hydratation notwendige Feuchtigkeit zugeführt, so dass die hohe Endfestigkeit zu 100 % erreicht wird.

Technisch gesehen ließen sich die Texturierungselemente auch durch abtragende Bearbeitung von Festkörpern mit geeigneten mechanischen Eigenschaften gewinnen. Das ist jedoch nach derzeitigem Kenntnisstand nicht wirtschaftlich.

Die Druckfestigkeit der Texturierungselemente beträgt mindestens 120 MPa, vorzugsweise mindestens 130 MPa, insbesondere mindestens 150 MPa. Die Druckfestigkeit wird gemäß DIN EN 196-1 bestimmt. Eine obere Grenze ist vom Verwendungszweck her nicht gegeben, jedoch bringen Werte über 180 MPa nach derzeitiger Kenntnis keinen Vorteil.

Vorzugsweise haben die Texturierungselemente einen Frost- und Frost-Tausalz-Widerstand, geprüft nach DIN CEN/TS 12390-9, mit einer Abwitterung von höchstens 1,5 kg/m², vorzugsweise höchstens 0,5 kg/m² und insbesondere höchstens 0,05 kg/m². Bei dem RPC der Texturierungselemente ist davon auszugehen, dass es aufgrund der hohen Dichte und Festigkeit des Betons sowie des niedrigen Wasserzementwertes keine Abwitterungen gibt. Abwitterungswerte unter 0,03 kg/m² sind nach derzeitiger Kenntnis nicht notwendig.

Vorzugsweise haben die Texturierungselemente einen Polierwiderstand (sog. PSV-Wert), gemessen nach DIN EN 1097-8, von mindestens 53, vorzugsweise mindestens 55 und insbesondere mindestens 58. Auch hier gibt es im Prinzip keine obere Grenze aber Werte über 62 sind nach derzeitiger Kenntnis nicht notwendig.

Die Herstellung von Verkehrsflächen erfolgt in an sich bekannter Weise, indem zunächst eine Tragschicht und ggfs. eine Binderschicht hergestellt werden. Auf diese wird die Deckschicht aufgebracht und mit den erfindungsgemäßen Texturierungselementen abgestreut. Solange die Deckschicht noch plastisch ist, werden die Texturierungselemente eingewalzt, eingedrückt oder eingerieben. Da sie keine Vorzugsrichtung haben, ergibt sich beim Einwalzen eine im Wesentlichen ebene Fläche. Wegen des sehr hohen Gestaltfaktors ist eine verringerte Deformation der Reifen beim Abrollen zu erwarten. Die leicht gerundeten Kanten sorgen dafür, dass sich die Texturierungselemente beim Aufstreuen nicht verhaken und gleichmäßig über die Fläche verteilen. Der Begriff Herstellung von Verkehrsflächen umfasst im Rahmen der vorliegenden Erfindung auch eine Instandsetzung von vorhandenen Verkehrsflächen, bei der zumindest die Deckschicht erneuert wird.

Als Deckschicht kommen vor allem heißer Walzasphalt (z.B. Asphaltmastix, Splittmastixasphalt, Asphaltbeton) und Gussasphalt, die aufgrund eingeführter Griffigkeitsanforderungen grundsätzlich abgestumpft bzw. abgestreut werden, in Betracht.

Aber auch Fahrbahndecken aus Beton lassen sich mit Hilfe der Texturierungselemente dauerhaft griffig und lärmmindernd herstellen bzw. ausrüsten. Gegenüber der Waschbeton-Bauweise mit natürlichen, relativ unregelmäßig gebrochenen Gesteinskörnungen kann mit den in Form, Gestalt und Materialqualität optimierten Texturierungselementen eine gleichmäßige Oberflächentextur im Hinblick auf Dauerhaftigkeit, Griffigkeit, Lärmminderung, Fahrdynamik und Fahrkomfort hergestellt werden.

Weiterhin können auch Verkehrsflächen aus Betonfertigteilen, beispielsweise gemäß DE 10 2007 040 245 A1, mit den Texturierungselementen ausgerüstet werden.

In noch einer Variante können die Texturierungselemente auf einem Träger fixiert bereitgestellt werden, beispielsweise auf einer Matte, einem Gitter, einem Vlies, einer Folie, einem Gewirke, einem Gewebe und anderen. Dieser Träger kann flexibel sein und in eine noch frische, d.h. noch nicht ausgehärtete, Oberfläche eingelegt werden. Es kann sich auch um einen starren Träger handeln, der die oberste Schicht der Verkehrsfläche bildet. Das Material für den Träger hängt davon ab, ob er eingebettet wird oder die oberste Schicht bildet. Träger, welche die oberste Schicht bilden, können z.B. aus Beton, Asphalt, Kunstharz oder Stahl bestehen. Träger, die in die oberste Schicht der Verkehrsfläche eingebaut werden, können z.B. aus Glas, Kunststoff, Textil oder Carbon bestehen. Am einfachsten werden die Träger durch einlegen in oder auflegen auf die frische Deckschicht beim Härten der Deckschicht befestigt. Auch Aufkleben ist möglich. Es versteht sich, dass die Träger so verlegt werden, dass sie eine geschlossene Oberfläche bilden. An der Unterseite der Träger können Verankerungsmittel und/oder an den Rändern Verbindungsmittel vorgesehen werden.

Die Texturierungselemente eignen sich auch für Oberflächen auf Basis von Epoxid- oder Polyurethanharz. Hierbei werden sie auf die frisch aufgebrachte Harzbeschichtung gestreut und vorzugsweise noch eingewalzt, eingedrückt oder eingerieben.

Die Erfindung soll anhand der folgenden Beispiele und der beigefügten Figuren erläutert werden, ohne jedoch auf die speziell beschriebenen Ausführungsformen beschränkt zu sein. Soweit nichts anderes angegeben ist oder sich aus dem Zusammenhang zwingend anders ergibt, beziehen sich Prozentangaben auf das Gewicht, im Zweifel auf das Gesamtgewicht der Mischung.

Die Erfindung bezieht sich auch auf sämtliche Kombinationen von bevorzugten Ausgestaltungen, soweit diese sich nicht gegenseitig ausschließen. Die Angaben "etwa" oder "ca." in Verbindung mit einer Zahlenangabe bedeuten, dass zumindest um 10 % höhere oder niedrigere Werte oder um 5 % höhere oder niedrigere Werte und in jedem Fall um 1 % höhere oder niedrigere Werte eingeschlossen sind.

Es zeigt:
Figur 1 ein erstes Texturierungselement
Figur 2 ein zweites Texturierungselement
Figur 3 ein drittes Texturierungselement
Figuren 4 - 9 einen Einwalzvorgang.

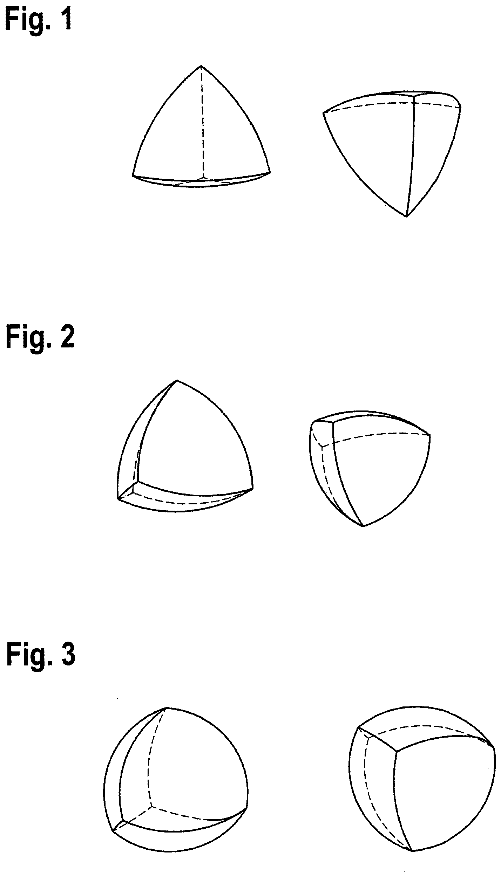

In den Figuren 1 bis 3 sind Texturierungselemente perspektivisch dargestellt, jeweils einmal mit einer Spitze nach oben und einmal mit einer Spitze nach unten. Die Texturierungselemente weisen unterschiedliche Wölbungshöhen auf. In Figur 1 beträgt die Wölbungshöhe 10 %, in Figur 2 beträgt sie 20 % und in Figur 3 beträgt sie 30 %. Im direkten Vergleich ist gut erkennbar, wie die zunehmende Wölbungshöhe die Texturierungselemente in der Außenkontur kugeliger macht. Trotzdem bleiben die gewölbten Flächen noch so flach, dass sie den Reifen eine flächige Abstützung bieten, die die Verformung des Reifens gering hält.

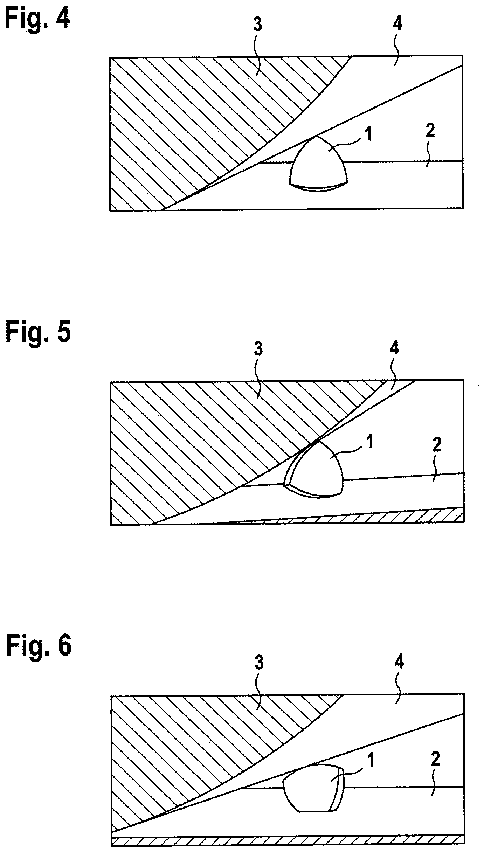

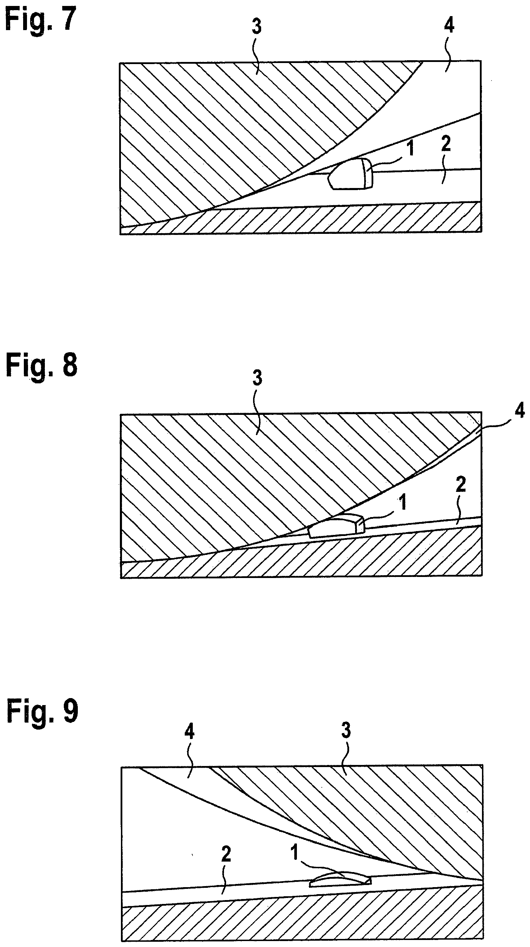

In den Figuren 4 bis 9 ist der Einwalzvorgang anhand eines einzelnen Texturierungselementes schematisch dargestellt. In Figur 4 ist der Moment gezeigt, bei dem das Texturierungselement 1 gerade mit der Oberfläche des Belages 2 und der Walze 3, d.h. der Rollfläche 4 der Walze 3, Kontakt bekommt. Die Größenverhältnisse von Texturierungselement 1 und Walze 3 sind nicht maßstabsgerecht. Beim Weiterrollen der Walze 3 übt deren Fläche 4 Druck auf das Texturierungselement 1 aus, dem dieses wie in Figur 5 gezeigt durch Eindringen seiner vorderen, unteren Spitze oder Kante in den noch plastischen Belag 2 nachgibt. Da die Kraft für das Eindringen der Spitze oder Kante geringer ist, als die Kraft für das Eindringen der Auflagefläche, richtet sich das Texturierungselement 1 beim Einwalzen mit der Spitze nach unten aus. Wie in den Figuren 6 bis 8 gezeigt, wird es von der Rollfläche 4 der Walze 3 immer weiter eingedrückt. Wenn die Walze 3 schließlich wie in Figur 9 gezeigt, über das Texturierungselement 1 hinweg gerollt ist, befindet sich dessen Oberfläche im Wesentlichen in einer Ebene zu der Oberfläche des Belags 2. Es ragt, je nach Verhältnis Gewichtskraft der Walze 3 und Plastizität des Belags 2 gar nicht oder nur mit (bei gewölbten Elementen 1 der Mitte) seiner Oberfläche aus dem Belag 2 vor oder steht - wie in Figur 9 übertrieben gezeigt - etwas heraus.

### Beispiel 1

Aus 600 kg/m³ Zement; 1800 kg/m³ Quarzmehl mit Korngrößen im Bereich von 0,04 bis 0,5 mm, 80 kg/m³ Silikastaub (16 Gew.-% bezogen auf den Zement), 172 kg/m³ Wasser (Wasserzementwert 0,35; Wasserbindemittelwert 0,25) und 38 kg/m³ Fließmittel (5 Gew.-%, bezogen auf den Zement) wurde ein Beton (sog. RPC) mit einer Rohdichte von 2540 kg/m³ hergestellt. Das Ausbreitmaß betrug 630 mm. Die Druck- und Biegezugfestigkeit des RPC wurde nach DIN EN 196-1 an prismatischen Probekörpern (sog. Mörtelprismen) mit einem Querschnitt von 40 mm x 40 mm und einer Länge von 160 mm ermittelt. Dazu wurde der RPC in die Probekörperform nach DIN EN 196-1 gegossen, auf dem Rütteltisch verdichtet und anschließend bündig abgezogen. Die Probekörper in der Form wurden mit einer Glasplatte abgedeckt und anschließend in einem Feuchtraum (Temperatur 20,0 °C ± 1,0 °C, relative Luftfeuchte > 90 %) bis zum Entformen nach 24 Stunden gelagert. Unmittelbar nach dem Entformen wurden die Probekörper in einem feuchten Tuch (Prüfung nach 24 Stunden) bzw. in einem Wasserbad mit einer Temperatur von 20,0 °C ± 1,0 °C bis zur jeweiligen Prüfung nach 1, 7 und 28 Tagen gelagert. Zunächst wurde an den Prismen nach DIN EN 196-1 die Biegezugfestigkeit und anschließend an den Prismenhälften die Druckfestigkeit ermittelt. Die Ergebnisse sind in Tabelle 1 zusammengefasst.

**Tabelle 1**

| Prüfalter | 1 d | 7 d | 28 d |
|---|---|---|---|
| Druckfestigkeit | 25,9 MPa | 95,9 MPa | 150,3 MPa |
| Biegezugfestigkeit | 5,0 MPa | 18,7 MPa | 22,0 MPa |

### Bezugszeichenliste

- 1: Texturierungselement
- 2: Belag
- 3: Walze
- 4: Walzenoberfläche

## Patentansprüche

1. Texturierungselement (1) für das Abstreuen oder Abstumpfen von Verkehrsflächen, **dadurch gekennzeichnet, dass** es eine tetraedrische Grundform mit einem Abstand zwischen zwei Eckpunkten von 2 bis 10 mm hat, wobei seine Oberflächen mit einem Verhältnis von Wölbungshöhe zum Abstand zwischen zwei Eckpunkten im Bereich von 0,05 bis 0,35 konkav gekrümmt sind, und es eine Druckfestigkeit von ≥ 120 MPa bestimmt nach DIN EN 196-1 aufweist.

2. Texturierungselement (1) gemäß Anspruch 1, **dadurch gekennzeichnet, dass** der Abstand zwischen zwei Eckpunkten im Bereich von 3 bis 8 mm liegt, vorzugsweise im Bereich von 4 bis 6 mm.

3. Texturierungselement (1) gemäß Anspruch 1 oder 2, **dadurch gekennzeichnet, dass** das Verhältnis von Wölbungshöhe zum Abstand zwischen zwei Eckpunkten im Bereich von 0,05 bis 0,30, vorzugsweise von 0,15 bis 0,25 liegt.

4. Texturierungselement (1) gemäß Anspruch 1, 2 oder 3, **dadurch gekennzeichnet, dass** die Oberflächen eine Mikrorauigkeit aufweisen.

5. Texturierungselement (1) gemäß einem der Ansprüche 1 bis 4, **dadurch gekennzeichnet, dass** es aus hochfestem Mörtel oder hochfestem Feinbeton besteht.

6. Texturierungselement (1) gemäß Anspruch 5, **dadurch gekennzeichnet, dass** der Mörtel oder Beton aus 500 - 1000 kg/m³ Zement; 1500 - 2000 kg/m³ Gesteinsmehl und 125 - 200 kg/m³ Wasser, Wasserzementwert 0,25 - 0,36, Wasserbindemittelwert 0,15 - 0,25, hergestellt ist.

7. Texturierungselement (1) gemäß Anspruch 6, **dadurch gekennzeichnet, dass** zusätzlich eines oder mehrere von
25 - 100 kg/m³ Silikastaub oder auch als Silikaslurry,
3 - 6 Gew.-% Fließmittel bezogen auf das Zementgewicht, und
1 bis 5 Gew.-% photokatalytisch aktives Material
jeweils bezogen auf das Zementgewicht, enthalten ist/sind.

8. Texturierungselement (1) gemäß einem der Ansprüche 1 bis 4, **dadurch gekennzeichnet, dass** es aus Keramik besteht.

9. Träger, auf dem eine Vielzahl von Texturierungselementen gemäß einem der Ansprüche 1 bis 8 fixiert sind.

10. Träger gemäß Anspruch 9, **dadurch gekennzeichnet, dass** es ein flexibler Träger aus Glas, Kunststoff, Textil oder Carbon ist.

11. Träger gemäß Anspruch 9, **dadurch gekennzeichnet, dass** es ein starrer Träger aus Beton, Asphalt, Stahl oder Kunstharz ist.

12. Verfahren zur Herstellung von Verkehrsflächen umfassend eine Deckschicht, **dadurch gekennzeichnet, dass**
- eine Deckschicht (2) hergestellt wird
- mit Texturierungselementen (1) gemäß einem der Ansprüche 1 bis 8 abgestreut wird und
- die Texturierungselemente (1) in die noch plastische Deckschicht (2) eingewalzt, eingedrückt oder eingerieben werden.

13. Verfahren zur Herstellung von Verkehrsflächen umfassend eine Deckschicht, **dadurch gekennzeichnet, dass**
- eine Deckschicht (2) hergestellt wird und
- mit einem Träger von Texturierungselementen (1) gemäß einem der Ansprüche 9 bis 11 belegt wird.

14. Verfahren zur Instandsetzung von Verkehrsflächen umfassend eine Deckschicht, **dadurch gekennzeichnet, dass**
- eine vorhandene Deckschicht entfernt wird
- eine neue Deckschicht (2) hergestellt wird
- mit Texturierungselementen (1) gemäß einem der Ansprüche 1 bis 8 abgestreut wird und
- die Texturierungselemente (1) in die noch plastische Deckschicht (2) eingewalzt, eingedrückt oder eingerieben werden.

15. Verfahren zur Instandsetzung von Verkehrsflächen umfassend eine Deckschicht, **dadurch gekennzeichnet, dass**
- eine vorhandene Deckschicht entfernt wird
- eine neue Deckschicht (2) hergestellt wird und
- mit einem Träger von Texturierungselementen (1) gemäß einem der Ansprüche 9 bis 11 belegt wird.

16. Verfahren gemäß einem der Ansprüche 12 bis 15, **dadurch gekennzeichnet, dass** als Deckschicht (2) Walzasphalt oder Gussasphalt gewählt wird.

17. Verfahren gemäß einem der Ansprüche 12 bis 15, **dadurch gekennzeichnet, dass** als Deckschicht (2) Beton gewählt wird.

18. Verwendung von Texturierungselementen (1) gemäß einem der Ansprüche 1 bis 8 zum Abstreuen oder Abstumpfen von Deckschichten (2) bei der Herstellung von Verkehrsflächen.

19. Verwendung von Texturierungselementen (1) gemäß einem der Ansprüche 1 bis 8 zum Abstreuen bzw. Abstumpfen von Epoxidharz- oder Polyurethanharz-Beschichtungen auf Verkehrsflächen.

20. Verwendung von Trägern mit Texturierungselementen gemäß einem der Ansprüche 9 bis 11 zum Aufbringen auf oder Einlegen in eine Deckschicht einer Verkehrsfläche.

## Claims

1. Texturizing element (1) for sanding or blunting traffic surfaces, **characterised in that** it has a tetrahedral basic shape having a distance between two corner points of 2 to 10 mm, wherein its surface is bent to be concave having a ratio of arching height to distance between two corner points ranging from 0.05 to 0.35, and **in that** it has a compressive strength of ≥ 120 MPa determined according to DIN EN 196-1.

2. Texturizing element (1) according to claim 1, **characterised in that** the distance between two corner points ranges from 3 to 8 mm, preferably from 4 to 6 mm.

3. Texturizing element (1) according to claim 1 or 2, **characterised in that** the ratio of arching height to distance between the two corner points ranges from 0.05 to 0.30, preferably from 0.15 to 0.25.

4. Texturizing element (1) according to claim 1, 2, or 3, **characterised in that** the surfaces have a micro-roughness.

5. Texturizing element (1) according to one of claims 1 to 4, **characterised in that** it consists of high strength mortar or high strength fine grained concrete.

6. Texturizing element (1) according to claim 5, **characterised in that** the mortar or concrete is produced from 500 - 1000 kg/m³ cement, 1500 - 2000 kg/m³ rock flour and 125 - 200 kg/m³ water, water cement value 0.25 - 0.36, water binder value 0.15 - 0.25.

7. Texturizing element (1) according to claim 6, **characterised in that**, additionally, one or several of the following is/are contained: 25 - 100 100 kg/m³ silica dust or silica slurry,
3 - 6 wt% plasticizer in terms of the cement weight, and
1 to 5 wt% photocatalytically active material
in each case in terms of the cement weight.

8. Texturizing element (1) according to one of claims 1 to 4, **characterised in that** it consists of ceramic.

9. Carrier, on which a multitude of texturizing elements according to one of claims 1 to 8 are fixed.

10. Carrier according to claim 9, **characterised in that** it is a flexible carrier made of glass, plastic, textile or carbon.

11. Carrier according to claim 9, **characterised in that** it is a rigid carrier made of concrete, asphalt, steel or artificial resin.

12. Method for producing traffic surfaces comprising a cover layer, **characterised in that**
- a cover layer (2) is produced
- sanded with texturizing elements (1) according to one of claims 1 to 8 and
- the texturizing elements (1) are rolled into, impressed or rubbed into the still plastic cover layer (2).

13. Method for producing traffic surfaces comprising a cover layer, **characterised in that**
- a cover layer (2) is produced and
- is coated by a carrier of texturizing elements (1) according to one of claims 9 to 11.

14. Method for restoring of traffic surfaces comprising a cover layer, **characterised in that**
- a present cover layer is removed
- a new cover layer (2) is produced
- sanded with texturizing elements (1) according to one of claims 1 to 8, and
- the texturizing elements (1) are rolled into, impressed or rubbed into the still plastic cover layer (2).

15. Method for restoring traffic surfaces comprising a cover layer, **characterised in that**
- a present cover layer is removed
- a new cover layer (2) is produced and
- it is coated with a carrier of texturizing elements (1) according to one of claims 9 to 11.

16. Method according to one of claims 12 to 15, **characterised in that** resin asphalt or mastic asphalt is chosen as the cover layer (2).

17. Method according to one of claims 12 to 15, **characterised in that** concrete is chosen as the cover layer (2).

18. Use of texturizing elements (1) according to one of claims 1 to 8 for sanding or blunting cover layers (2) when producing traffic surfaces.

19. Use for texturizing elements (1) according to one of claims 1 to 8 for sanding or blunting epoxy resin or polyurethane resin coating on traffic surfaces.

20. Use of carriers with texturizing elements according to one of claims 9 to 11 for applying onto or inserting into a cover layer of a traffic surface.

## Revendications

1. Elément de texturation (1) destiné à être épandu sur des surfaces de circulation ou à rendre ces dernières moins glissantes, **caractérisé en ce qu'**il présente une forme de base tétraédrique, la distance entre deux sommets étant comprise entre 2 à 10 mm, et que ses faces présentent une courbure concave, le rapport entre la hauteur de la courbure et la distance entre deux sommets étant compris entre 0,05 et 0,35, et qu'il présente une résistance à la compression de ≥ 120 MPa, déterminée selon DIN EN 196-1.

2. Elément de texturation (1) selon la revendication 1, **caractérisé en ce que** la distance entre deux sommets est comprise entre 3 à 8 mm, de préférence comprise entre 4 et 6 mm.

3. Elément de texturation (1) selon les revendications 1 ou 2, **caractérisé en ce que** le rapport entre la hauteur de la courbure et la distance entre deux sommets est compris entre 0,05 et 0,30, de préférence entre 0,15 et 0,25.

4. Elément de texturation (1) selon les revendications 1, 2 ou 3, **caractérisé en ce que** les faces présentent une rugosité à l'échelle micro.

5. Elément de texturation (1) selon l'une des revendications 1 à 4, **caractérisé en ce qu'**il est constitué de mortier à hautes performances ou de béton fin à hautes performances.

6. Elément de texturation (1) selon la revendication 5, **caractérisé en ce que** ledit mortier ou béton est fabriqué à partir de 500 à 1 000 kg/m³ de ciment; 1 500 à 2 000 kg/m³ de poudres minérales et 125 à 200 kg d'eau,
le rapport eau/ciment étant compris entre 0,25 et 0,36, le rapport moyen eau/liant étant compris entre 0,15 et 0,25.

7. Elément de texturation (1) selon la revendication 6, **caractérisé en ce qu'**il contient en outre un ou plusieurs des ingrédients suivants
25 à 100 kg/m³ de fumée de silice, pouvant également se présenter sous forme d'une suspension de silice,
3 à 6 % en poids de plastifiant, par rapport au poids du ciment, et
1 à 5 % en poids de matériau ayant une activité photocatalytique, toujours par rapport au poids du ciment.

8. Elément de texturation (1) selon l'une des revendications 1 à 4, **caractérisé en ce qu'**il est constitué de matériaux céramiques.

9. Support sur lequel sont fixés plusieurs éléments de texturation selon l'une des revendications 1 à 8.

10. Support selon la revendication 9, **caractérisé en ce qu'**il s'agit d'un support flexible en verre, matière plastique, matière textile ou en carbone.

11. Support selon la revendication 9, **caractérisé en ce qu'**il s'agit d'un support rigide en béton, enrobé bitumineux, acier ou en résine de synthèse.

12. Procédé de fabrication de surfaces de circulation comprenant une couche supérieure, **caractérisé en ce que** l'on
- fabrique une couche supérieure (2)
- épand des éléments de texturation (1) selon l'une des revendications 1 à 8 sur celle-ci, et
- enfonce les éléments de texturation (1) dans la couche supérieure (2) encore plastique, en mettant en oeuvres des cylindres, de la pression ou un frottement.

13. Procédé de fabrication de surfaces de circulation comprenant une couche supérieure, **caractérisé en ce que** l'on
- fabrique une couche supérieure (2), et
- pose sur celle-ci un support d'éléments de texturation (1) selon l'une des revendications 9 à 11.

14. Procédé de réfection de surfaces de circulation comprenant une couche supérieure, **caractérisé en ce que** l'on
- enlève l'ancienne couche supérieure
- fabrique une nouvelle couche supérieure (2)
- épand des éléments de texturation (1) selon l'une des revendications 1 à 8 sur cette dernière, et
- enfonce les éléments de texturation (1) dans la couche supérieure (2) encore plastique, en mettant en oeuvres des cylindres, de la pression ou un frottement.

15. Procédé de réfection de surfaces de circulation comprenant une couche supérieure, **caractérisé en ce que** l'on
- enlève l'ancienne couche supérieure
- fabrique une nouvelle couche supérieure (2), et
- pose sur cette dernière un support d'éléments de texturation (1) selon l'une des revendications 9 à 11.

16. Procédé selon l'une des revendications 12 à 15, **caractérisé en ce que** l'on choisit, en tant que couche supérieure (2), de l'enrobé compacté ou de l'enrobé coulé.

17. Procédé selon l'une des revendications 12 à 15, **caractérisé en ce que** l'on choisit, en tant que couche supérieure (2), du béton.

18. Utilisation d'éléments de texturation (1) selon l'une des revendications 1 à 8, pour l'épandage sur des surfaces de circulation (2) ou pour rendre ces dernières moins glissantes, lors de la fabrication de surfaces de circulation.

19. Utilisation d'éléments de texturation (1) selon l'une des revendications 1 à 8 pour l'épandage sur des revêtements en résine époxyde ou en résine de polyuréthane et/ou pour rendre ceux-ci moins glissants sur les surfaces de circulation.

20. Utilisation de supports pourvus d'éléments de texturation selon l'une des revendications 9 à 11 pour les appliquer sur une couche supérieure d'une surface de circulation ou à les y intégrer.
